# EUROPÄISCHE PATENTANMELDUNG

(11) **EP 3 057 347 A1**
(43) Veröffentlichungstag der Anmeldung: **17.08.2016**
(21) Anmeldenummer: 16155067.8
(22) Anmeldetag: 10.02.2016
(51) Int. Cl.: H04W 4/00, H04L 29/08

(54) **VERFAHREN ZUR NAHFELDKOMMUNIKATION MIT EINER KOMPONENTE EINER ELEKTRISCHEN SCHWEISSANLAGE SOWIE KOMPONENTE EINER ELEKTRISCHEN SCHWEISSANLAGE ZUR DURCHFÜHRUNG DES VERFAHRENS**

(30) Priorität: 13.02.2015 DE 102015102145
(71) Anmelder: Lorch Schweisstechnik GmbH, 71549 Auenwald (DE)
(72) Erfinder: GÖPPERT, Josef, 72127 Kusterdingen (DE)
(74) Vertreter: Hoeger, Stellrecht & Partner Patentanwälte mbB

(57) **Zusammenfassung**

Die Erfindung betrifft ein Verfahren zur Nahfeldkommunikation mit einer Komponente (10) einer elektrischen Schweißanlage (11), wobei man Daten und/ oder Programme über einen NFC-Kommunikationskanal überträgt. Um das Verfahren auf einfache Weise betreiben zu können und eine spontane Kommunikation mit der Komponente (10) der Schweißanlage (11) zu ermöglichen, wird erfindungsgemäß vorgeschlagen, dass man die Daten und/oder Programme in eine URI oder ein MIME-Format einbettet und in einem Standardformat der NFC-Datenübertragung über den NFC-Kommunikationskanal zwischen dem mobilen Endgerät (12) und der Komponente (10) der Schweißanlage überträgt, wobei die vom mobilen Endgerät (12) übertragenen Daten und/oder Programme von der Komponente (10) der Schweißanlage (11) extrahiert und direkt verarbeitet werden ohne Aufbau einer Verbindung zu einer webbasierten Ressource (14) und ohne zwingende Darstellung der URI- oder MIME-Dateninhalte. Außerdem wird eine Komponente (10) einer elektrischen Schweißanlage (11) zur Durchführung des Verfahrens vorgeschlagen.

## Beschreibung

Die Erfindung betrifft ein Verfahren zur Nahfeldkommunikation mit einer Komponente einer elektrischen Schweißanlage, wobei man Daten und/oder Programme über einen NFC-Kommunikationskanal überträgt.

Außerdem betrifft die Erfindung eine Komponente einer elektrischen Schweißanlage zur Durchführung des Verfahrens.

Elektrische Schweißanlagen zum Lichtbogenschweißen umfassen verschiedene Komponenten, beispielsweise ein Steuerteil, ein Leistungsteil und einen Schweißbrenner mit einer Schweißelektrode. Zwischen der Schweißelektrode und einem zu schweißenden Werkstück wird ein Lichtbogen gezündet, unter dessen Wirkung eine Schweißnaht erzeugt wird. Vom Leistungsteil werden die erforderliche elektrische Schweißspannung und der erforderliche elektrische Schweißstrom bereitgestellt. Das Steuerteil steuert das Leistungsteil. Als weitere Komponente kann beispielsweise ein Bedienteil mit einer Eingabeeinrichtung und einer Anzeigeeinrichtung zum Einsatz kommen. Die Schweißanlage kann auch ein Drahtvorschubteil, ein Wasserkühlteil und/oder ein Netzwerkteil aufweisen.

Von den Schweißanlagen können unterschiedliche Programme gespeichert werden zur Durchführung unterschiedlicher Schweißverfahren und/oder zum Schweißen unterschiedlicher Werkstücke. Vom Benutzer werden derartige Schweißanlagen häufig zur Erledigung ganz bestimmter Schweißaufgaben erworben. Es kann allerdings vorkommen, dass der Benutzer zu einem späteren Zeitpunkt weitere Schweißaufgaben erledigen möchte, die mit den beim Erwerb der Schweißanlage für den Benutzer zunächst verfügbaren Funktionen der Schweißanlage nicht bewältigt werden können. Der Benutzer hat dann die Möglichkeit, die Funktionen der Schweißanlage zu erweitern, so dass er beispielsweise weitere Bedienmöglichkeiten hat und/oder dem Benutzer weitere Programme zur Verfügung gestellt werden. Eine Funktionserweiterung kann auch darin bestehen, dass eine Schnittstelle der Schweißanlage, beispielsweise eine Schnittstelle des Steuerteils oder des Leistungsteils, freigeschaltet wird, so dass an die Schweißanlage Automatisierungssysteme oder Zusatzgeräte angeschlossen werden können. Die Freischaltung der Schnittstelle kann beispielsweise auch erfolgen, um Schweißparameter, die bei der Erledigung bestimmter Schweißaufgaben vorliegen, auslesen und/oder dokumentieren zu können.

Zur Funktionserweiterung der Schweißanlage kann eine Software, ein Datenpaket mit Einstell- oder Parameterwerten oder beispielsweise ein Freischalt- oder Autorisierungscode zum Einsatz kommen, die der Benutzer vom Hersteller der Schweißanlage erwerben kann. Beispielsweise kann vorgesehen sein, dass der Benutzer vom Hersteller der Schweißanlage ein von einer Komponente der Schweißanlage, beispielsweise vom Steuerteil auslesbares Speichermedium erwirbt, auf dem Erweiterungsdaten gespeichert sind. Nach Einlesen der Erweiterungsdaten in der Komponente der Schweißanlage kann dann die gewünschte Funktionserweiterung vorgenommen werden.

Als Speichermedium kann beispielsweise eine NFC-Karte zum Einsatz kommen. Es handelt sich hierbei um eine Chip-Karte oder Smartcard, die eine Nahfeldkommunikation ermöglicht. Derartige NFC-Karten sind dem Fachmann an sich bekannt. Sie verfügen über einen Speicherchip, auf dem Daten und/oder Programme gespeichert sind, und erlauben die drahtlose Übertragung dieser Daten und/oder Programme über einen NFC-Kommunikationskanal von der NFC-Karte zu einer Komponente der Schweißanlage. Die Abkürzung "NFC" steht für "Near Field Communication", das heißt für "Nahfeldkommunikation". Hierbei handelt es sich um einen internationalen Übertragungsstandard zum kontaktlosen Austausch von Daten und/oder Programmen per Funktechnik über Strecken von wenigen Zentimetern.

NFC-Karten werden üblicherweise auf dem Postweg vom Hersteller der Schweißanlage zum Benutzer gesandt. Dies birgt die Gefahr, dass die NFC-Karten auf dem Postweg verloren gehen. Darüber hinaus müssen NFC-Karten vom Benutzer erst angefordert werden und stehen ihm dann erst mit beachtlicher Zeitverzögerung zur Verfügung. NFC-Karten ermöglichen daher keine spontane Funktionserweiterung einer Schweißanlage.

Die Übertragung von Daten und/oder Programmen zu einer Komponente einer Schweißanlage kann auch über eine Leitung und eine serielle Schnittstelle erfolgen, indem ein externer Computer, insbesondere ein Personalcomputer oder ein Laptop, an die Komponente angeschlossen wird. Dies macht allerdings eine spezielle Ausgestaltung der Komponente der Schweißanlage erforderlich sowie die Installation spezieller Software auf dem Computer. Die Software muss für verschiedene Betriebssysteme erstellt und gepflegt werden. Für den nur gelegentlichen Einsatz durch den Benutzer der Schweißanlage ist eine derartige Übertragung von Daten und/oder Programmen aufgrund des damit verbundenen Aufwands nur bedingt geeignet.

Eine aufwändige und teure Lösung zur Kommunikation mit einer Komponente einer Schweißanlage kann auch darin bestehen, dass die Komponente über ein Feldbus, Ethernet oder WLAN vernetzt wird. Dies reduziert allerdings die Mobilität der Schweißanlage. Für den Einsatz der Schweißanlage beispielsweise auf einer Baustelle ist eine derartige Kommunikation nicht geeignet.

Aufgabe der vorliegenden Erfindung ist es, ein Verfahren der eingangs genannten Art bereitzustellen, das auf einfache Weise betrieben werden kann und eine spontane Kommunikation mit einer Komponente einer Schweißanlage ermöglicht.

Diese Aufgabe wird bei einem Verfahren der eingangs genannten Art erfindungsgemäß dadurch gelöst, dass man die Daten und/oder Programme in eine URI oder ein MIME-Format einbettet und in einem Standardformat der NFC-Datenübertragung über den NFC-Kommunikationskanal zwischen einem mobilen Endgerät und der Komponente der Schweißanlage überträgt, wobei die vom mobilen Endgerät übertragenen Daten und/oder Programme von der Komponente der Schweißanlage extrahiert und direkt verarbeitet werden ohne Aufbau einer Verbindung zu einer webbasierten Ressource und ohne zwingende Darstellung der URI- oder MIME-Dateninhalte.

In die Erfindung fließt der Gedanke mit ein, dass viele mobile Endgeräte, insbesondere Smartphones, Tablet-Computer und Personal Digital Assistants (PDAs) standardmäßig über eine NFC-Schnittstelle verfügen, die eine Nahfeldkommunikation ermöglicht. Das derart ausgestattete mobile Endgerät verfügt standardmäßig über eine Software zur Nahfeldkommunikation, wobei Standardfunktionen des Betriebssystems des mobilen Endgeräts und vom Hersteller des mobilen Endgeräts standardmäßig vorinstallierte Applikationen wie zum Beispiel File-Browser, Internet-Browser, E-Mail-Programme und/oder Anzeige- und Abspielfunktionen für Bild-, Video- oder Audiodaten zum Einsatz kommen. Die von den Herstellern derartiger mobilen Endgeräte vorgesehene NFC-Datenübertragung erfolgt in einem Standardformat und ermöglicht beispielsweise eine bargeldlose Zahlung kleinerer Beträge an der Kasse eines Supermarktes. Erfindungsgemäß wurde erkannt, dass die Standardfunktion des mobilen Endgeräts zur Nahfeldkommunikation auch zur Übertragung von im Hinblick auf die Standardfunktion des mobilen Endgeräts an sich artfremden, nämlich schweißanlagentypischen Daten und Programmen genutzt werden kann, sofern die Daten und/oder Programme in eine URI oder ein MIME-Format eingebettet sind, denn derart eingebettet können auch diese artfremden Daten und/oder Programme von dem mobilen Endgerät unter Nutzung eines Standardformats der NFC-Datenübertragung ohne Weiteres übertragen werden. Die Abkürzung "MIME" steht für "Multipurpose Internet Mail Extension" und die Abkürzung "URI" steht für "Uniform Resource Identifier". Ein Uniform Resource Identifier wird zur Bezeichnung einer Ressource im Internet genutzt, beispielsweise einer Webseite, einer sonstigen Datei oder auch eines E-Mail-Empfängers. Durch das Einbetten der Daten und/oder Programme in eine URI oder ein MIME-Format können die Daten und/oder Programme ohne Einsatz einer speziell für die Kommunikation mit einer Komponente einer Schweißanlage konzipierten Software zwischen dem mobilen Endgerät und der Komponente der Schweißanlage übertragen werden. Mobile Endgeräte mit der Fähigkeit zur Nahfeldkommunikation sind äußerst weit verbreitet und stehen daher dem Benutzer der Schweißanlage üblicherweise zur Verfügung. Durch das Einbetten der beispielsweise für eine Funktionserweiterung einer Schweißanlage erforderlichen Daten und/oder Programme in eine URI oder ein MIME-Format und die Übertragung der derart eingebetteten Daten und/oder Programme in einem Standardformat der NFC-Datenübertragung kann der Benutzer der Schweißanlage spontan eine Funktionserweiterung vornehmen, ohne dass er mit großem zeitlichen Vorlauf eine NFC-Karte erwerben oder eine spezielle Software auf sein mobiles Endgerät aufspielen muss.

Die vom mobilen Endgerät an die Komponente der Schweißanlage übertragenden Daten und/oder Programme werden von der Komponente der Schweißanlage extrahiert und direkt verarbeitet, ohne dass von der Komponente der Schweißanlage eine Verbindung zu einer webbasierten Ressource hergestellt wird. Die Komponente der Schweißanlage kann folglich derart ausgestaltet sein, dass sie gar keine Verbindung zu einer webbasierten Ressource aufbauen kann. Es ist auch nicht erforderlich, dass die Komponente der Schweißanlage die URI- oder MIME-Dateninhalte anzeigt. Die Komponente der Schweißanlage, die über den NFC-Kommunikationskanal mit dem mobilen Endgerät kommuniziert, muss also nicht zwingend derart ausgestaltet sein, dass sie die Möglichkeit zur Darstellung der URI- oder MIME-Dateninhalte hat. Vielmehr ist es lediglich erforderlich, dass die Komponente der Schweißanlage die Daten und/oder Programme zur Verarbeitung, beispielsweise zur Erweiterung der Funktionen der Schweißanlage, heranzieht. Es kann insbesondere vorgesehen sein, dass die Daten und/oder Programme zur Aktualisierung eines bereits vorhandenen Schweißprogramms oder auch zur Erweiterung eines Schweißprogramms genutzt werden.

Die zwischen dem mobilen Endgerät und der Komponente der Schweißanlage übertragenen Daten umfassen günstigerweise Texte, Einstellwerte, insbesondere schweißaufgabenspezifische Einstellwerte, Konfigurationsdaten, Parameter, Spracheinstellungen, Flash-Files und/oder Informationen zu Service- und Helpdesk-Zwecken.

Die zwischen dem mobilen Endgerät und der Komponente der Schweißanlage übertragenen Programme umfassen vorteilhafterweise ausführbare Programmcodes und/oder Programme.

Von der Komponente der Schweißanlage werden die übertragenen Daten und/oder Programme beispielsweise zur Steuerung von Aktoren genutzt, die Einfluss nehmen auf einen elektrischen, physikalischen oder chemischen Prozess. Auch Messwert-Erfassungssysteme können durch die Daten und/oder Programme beeinflusst werden, wobei mittels der Messwerterfassungssysteme elektrische, physikalische oder chemische Größen erfasst und/oder verarbeitet werden. Der elektrische oder physikalische Prozess ist bevorzugt ein Lichtbogenschweißprozess.

Bei dem Standardformat zur NFC-Datenübertragung, das zur Übertragung der in eine URI oder ein MIME-Format eingebetteten Daten und/oder Programme zum Einsatz kommt, handelt es sich bevorzugt um ein NDEF-Datenformat. Die Abkürzung "NDEF" steht für "NFC Data Exchange Format", das ist ein Datenformat, das vom NFC-Forum vorgegeben wird. Das NFC-Forum wird von verschiedenen Unternehmen insbesondere der Informationstechnologie gebildet und betreibt die Implementierung und Standardisierung der NFC-Technik. NDEF-Datenformate sind dem Fachmann bekannt und weit verbreitet, und die Nutzung eines NDEF-Datenformats ermöglicht es auf besonders einfache Weise, die Daten und/oder Programme mit Hilfe eines handelsüblichen mobilen Endgeräts, das zur Nahfeldkommunikation fähig ist, drahtlos zu übertragen. Die Nutzung eines NDEF-Datenformats ermöglicht es, die eingebetteten Daten und/oder Programme nach dem standardisierten Applications-Level-Protokoll zu übertragen. Die Übertragung kann insbesondere nach dem SNEP-Protokoll (Simple NDEF Exchange Protocol) erfolgen. Entsprechende Standardfunktionen des mobilen Endgeräts werden häufig als "Teilen", "Share" oder "Beam" bezeichnet. Sie kommen beispielsweise zum Einsatz, um Weblinks von einem ersten mobilen Endgerät, insbesondere einem ersten Smartphone, über einen NFC-Kommunikationskanal zu einem zweiten Endgerät, insbesondere einem zweiten Smartphone zu übertragen. Diese Übertragungsart zeichnet sich durch eine besonders einfache und intuitive Vorgehensweise aus. Sie ermöglicht es auch Benutzern ohne technische Vorbildung und Schulung, die gewünschten Daten und/oder Programme zu übertragen.

Als NDEF-Datenformat kann insbesondere ein Datenformat vom Typ "well-known type" oder "media type" des NFC-Forums zum Einsatz kommen.

Die Übertragung der Daten und/oder Programme kann vom mobilen Endgerät in der Weise realisiert werden, dass ausschließlich standardmäßig installierte Funktionen des mobilen Endgeräts genutzt werden, insbesondere Funktionen des Betriebssystems, des Webbrowsers, des E-Mail-Programms und/oder allgemeine Anzeige- und Abspielfunktionen von MIME-Daten.

Eine besonders einfache Übertragung der Daten und/oder Programme wird bei einer vorteilhaften Ausführungsform des erfindungsgemäßen Verfahrens dadurch erzielt, dass man die Daten und/oder Programme in einen Weblink einbettet und den Weblink in einem Webbrowser oder einem E-Mail-Programm des mobilen Endgeräts aufruft. Das mobile Endgerät kann mittels seines Webbrowsers eine Internetverbindung beispielsweise zu einem Webserver herstellen, wobei in den dafür erforderlichen Weblink die Daten und/oder Programme eingebettet sind.

Es kann beispielsweise vorgesehen sein, dass man eine Internetverbindung herstellt vom mobilen Endgerät zu einer webbasierten Ressource und dass man von der webbasierten Ressource Informationen, insbesondere Handlungsanweisungen, herunterlädt, die die in den Weblink eingebetteten Daten und/oder Programme betreffen, und dass man diese Informationen am mobilen Endgeräts grafisch oder akustisch anzeigt. Das mobile Endgerät verfügt standardmäßig über eine Anzeigeeinrichtung, häufig in Form eines berührungsempfindlichen Monitors (Touch Screen). An der Anzeigeeinrichtung können dem Benutzer Anweisungen grafisch angezeigt werden, die das Herstellen der gewünschten Nahfeldkommunikation mit der Komponente der Schweißanlage betreffen. Es kann auch vorgesehen sein, dass dem Benutzer die Informationen am Lautsprecher des mobilen Endgeräts akustisch angezeigt werden. Der Benutzer kann beispielsweise die Information erhalten, dass er das mobile Endgerät an einer NFC-Schnittstelle der Komponente der Schweißanlage positionieren soll. Vom mobilen Endgerät wird dann mit Hilfe der Standardsoftware des mobilen Endgeräts ein NFC-Kommunikationskanal hergestellt und die in den Weblink eingebetteten Daten und/oder Programme werden selbsttätig in einem Standardformat der NFC-Datenübertragung an die Komponente der Schweißanlage übertragen.

Die Daten und/oder Programme werden bei einer vorteilhaften Ausführungsform der Erfindung von der webbasierten Ressource gespeichert und/oder verarbeitet. Beispielsweise kann vorgesehen sein, dass die Daten und/oder Programme von der webbasierten Ressource derart aufbereitet werden, dass sie auf einer Anzeigeeinrichtung des mobilen Endgeräts veranschaulicht werden können.

Bei einer vorteilhaften Ausführungsform des erfindungsgemäßen Verfahrens werden die Daten und/oder Programme in eine Foto-, Audio- oder Videodatei eingebettet, die am mobilen Endgerät grafisch oder akustisch angezeigt wird.

Das Einbetten der Daten und/oder Programme in eine URI oder ein MIME-Format erfolgt bei einer vorteilhaften Ausgestaltung der Erfindung mittels einer webbasierten Ressource. Die webbasierte Ressource kann beispielsweise vom Hersteller der Schweißanlage oder einem von ihm beauftragten Unternehmen betrieben werden.

Als webbasierte Ressource kommt vorzugsweise ein Webserver zum Einsatz.

Die in eine URI oder ein MIME-Format eingebetteten Daten und/oder Programme werden günstigerweise von der webbasierten Ressource per E-Mail oder über eine Internetverbindung an das mobile Endgerät übertragen. Der Benutzer hat somit die Möglichkeit, die gewünschten Daten und/oder Programme von der webbasierten Ressource anzufordern, beispielsweise von einem Webserver. Die webbasierte Ressource bettet die gewünschten Daten und/oder Programme in eine URI oder ein MIME-Format ein, und die derart eingebetteten Daten und/oder Programme werden von der webbasierten Ressource per E-Mail oder über eine Internetverbindung an das mobile Endgerät übertragen. Zusätzlich können von der webbasierten Ressource weitere Informationen, insbesondere Handlungsanweisungen und/oder Zusatzinformationen, die die Daten und/oder Programme betreffen, per E-Mail oder über die Internetverbindung an das mobile Endgerät übertragen und von diesem an der Anzeigevorrichtung des mobilen Endgeräts angezeigt werden. Es kann auch vorgesehen sein, dass Informationen, die die Daten und/oder Programme betreffen, in Form einer Audio- oder Videodatei dem mobilen Endgerät zur Verfügung gestellt und von diesem abgespielt werden.

In eine URI oder ein MIME-Format eingebettete Daten und/oder Programme können vom mobilen Endgerät an die Komponente der Schweißanlage übertragen werden. Alternativ oder ergänzend kann auch vorgesehen sein, dass in eine URI oder ein MIME-Format eingebettete Daten und/oder Programme von der Komponente der Schweißanlage an das mobile Endgerät übertragen werden.

Die vom mobilen Endgerät übertragenen und in eine URI oder ein MIME-Format eingebetteten Daten und/oder Programme werden von der Komponente der Schweißanlage günstigerweise mittels einer Extraktionseinheit extrahiert. Wie bereits erwähnt, ist es nicht erforderlich, dass die Komponente der Schweißanlage die Möglichkeit zur Darstellung der URI- oder MIME-Dateninhalte hat. Die über die NFC-Schnittstelle der Komponente der Schweißanlage an diese Komponente übertragenen Daten und/oder Programme können, nachdem sie extrahiert wurden, verarbeitet werden, sie können beispielsweise zur Funktionserweiterung der Schweißanlage genutzt werden.

An das mobile Endgerät zu übertragende Daten werden günstigerweise mittels einer Einbettungseinheit der Komponente der Schweißanlage in eine URI oder ein MIME-Format eingebettet.

Die NFC-Datenübertragung zwischen dem mobilen Endgerät und der Komponente der Schweißanlage erfolgt günstigerweise bidirektional. Es können somit nicht nur Daten und/oder Programme vom mobilen Endgerät zur Komponente der Schweißanlage übertragen werden, sondern es besteht auch die Möglichkeit, Daten und/oder Programme von der Komponente der Schweißanlage über den NFC-Kommunikationskanal an das mobile Endgerät zu übertragen, wobei auch bei diesem Übertragungsweg die Daten und/oder Programme in eine URI oder in ein MIME-Format eingebettet und in einem Standardformat der NFC-Datenübertragung übertragen werden.

Es kann beispielsweise vorgesehen sein, dass die Komponente der Schweißanlage, nachdem sie vom mobilen Endgerät Daten und/oder Programme über den NFC-Kommunikationskanal erhalten hat, einen Freischaltcode oder Autorisierungscode vom mobilen Endgerät über den NFC-Kommunikationskanal anfordert. Die Anforderung kann dergestalt erfolgen, dass die Komponente der Schweißanlage Anforderungsdaten beispielsweise in eine URI einbettet und über den NFC-Kommunikationskanal an das mobile Endgerät überträgt. Da die Daten in einem Standardformat der NFC-Datenübertragung übertragen werden, können die Daten mit der vom Betriebssystem des mobilen Endgeräts vorgesehenen Standardmethode verarbeitet werden. Im vorliegenden Fall schlägt das Betriebssystem des mobilen Endgeräts vor, den Webbrowser zu öffnen und den Freischalt- oder Autorisierungscode von der in der URI definierten webbasierten Ressource anzufragen. Diese Anfrage beinhaltet die von der Einbettungseinheit der Komponente der Schweißanlage in die URI eingebetteten Anforderungsdaten. Die Anforderungsdaten werden somit selbsttätig an die webbasierte Ressource übertragen, ohne dass das mobile Endgerät eine vom Standard abweichende Handlung vornehmen müsste. Nach Empfang der Anforderungsdaten, die beispielsweise eine Identifikationsnummer der Schweißanlage beinhalten können, kann die webbasierte Ressource eine Autorisierungsprüfung durchführen. Ergibt die Prüfung, dass die Komponente der Schweißanlage, von der die Anforderung des Freischalt- oder Autorisierungscodes stammt, zur Verarbeitung der Daten und/oder Programme autorisiert ist, dann kann die webbasierte Ressource den Freischalt- oder Autorisierungscode in eine URI oder ein MIME-Format einbetten und über das Internet an das mobile Endgerät übertragen. Vom mobilen Endgerät kann der eingebettete Freischalt- oder Autorisierungscode in einem Standardformat der NFC-Datenübertragung über den NFC-Kommunikationskanal an die Komponente der Schweißanlage übertragen werden. Nach Empfang des Freischalt- oder Autorisierungscodes kann die Komponente der Schweißanlage die Daten und/oder Programme verarbeiten, indem sie beispielsweise eine vom Benutzer gewünschte Funktionserweiterung vornimmt.

Die NFC-Kommunikation mit der Komponente der Schweißanlage erfolgt günstigerweise im Peer-to-Peer-Modus oder im Card-Emulation-Modus. Derartige Modi sind dem Fachmann an sich bekannt und bedürfen daher vorliegend keiner näheren Erläuterung.

Der Verbindungsaufbau und die Datenübertragung zwischen dem mobilen Endgerät und der Komponente der Schweißanlage erfolgen günstigerweise gemäß der "Connection Handover Technical Specification" des NFC-Forums. Es handelt sich hierbei um eine vom NFC-Forum vorgeschlagene Spezifikation, die erläutert, wie der Verbindungsaufbau und die Datenübertragung erfolgen können.

Bei einer vorteilhaften Ausführungsform des erfindungsgemäßen Verfahrens wird nach Empfang der Daten und/oder Programme, insbesondere bei Übertragung von Daten im MIME-Format, selbsttätig eine Bluetooth- oder WLAN-Verbindung zwischen der Komponente der Schweißanlage und dem mobilen Endgerät hergestellt. Bei einer derartigen Ausgestaltung dient somit die Übertragung der Daten und/oder Programme über den NFC-Kommunikationskanal dazu, zur weiteren Übertragung von Daten und/oder Programmen eine Bluetooth- oder WLAN-Verbindung herzustellen.

Wie bereits erwähnt, kann die Komponente der Schweißanlage, an die vom mobilen Endgerät Daten und/oder Programme übertragen werden und/oder die an das mobile Endgerät Daten und/oder Programme überträgt, ein Steuerteil, ein Stromversorgungsteil, ein Leistungsteil, ein Bedienteil, ein Schweißbrenner, ein Drahtvorschubteil, ein Wasserkühlteil oder beispielsweise auch ein Netzwerkteil der Schweißanlage sein.

Die Erfindung betrifft auch eine Komponente einer elektrischen Schweißanlage zur Durchführung des voranstehend erläuterten Verfahrens. Erfindungsgemäß weist die Komponente der elektrischen Schweißanlage eine NFC-Schnittstelle zur drahtlosen Nahfeldkommunikation mit einem mobilen Endgerät auf. Außerdem weist die Komponente eine Extraktionseinheit und/oder eine Einbettungseinheit auf, wobei mittels der Extraktionseinheit in eine URI oder ein MIME-Format eingebettete Daten und/oder Programme extrahierbar und mittels der Einbettungseinheit Daten und/oder Programme in eine URI oder ein MIME-Format einbettbar sind. Darüber hinaus weist die erfindungsgemäße Komponente der Schweißanlage eine Verarbeitungseinheit auf zur direkten Verarbeitung der extrahierten Daten und/oder Programme ohne Aufbau einer Verbindung zu einer webbasierten Ressource und ohne zwingende Darstellung der URI- oder MIME-Dateninhalte.

Wie bereits erwähnt, können die in eine URI oder ein MIME-Format eingebetteten Daten und/oder Programme vom mobilen Endgerät in einem Standardformat der NFC-Datenübertragung ohne Einsatz einer speziell an die Schweißanlage angepassten Anwendungssoftware über den NFC-Kommunikationskanal übertragen werden. Die Komponente der Schweißanlage weist hierzu eine NFC-Schnittstelle auf und die in eine URI oder ein MIME-Format eingebetteten Daten und/oder Programme können von der Komponente der Schweißanlage mittels einer Extraktionseinheit extrahiert und mittels einer Verarbeitungseinheit direkt verarbeitet werden. Die Extraktion und Verarbeitung der Daten erfolgt, ohne dass von der Komponente der Schweißanlage eine Verbindung zu einer webbasierten Ressource aufgebaut wird. Es ist für die Komponente der Schweißanlage auch nicht zwingend erforderlich, die extrahierten Daten und/oder Programme anzuzeigen. Die Daten und/oder Programme können beispielsweise zur Funktionserweiterung der Komponente der Schweißanlage genutzt werden, ohne dass die Komponente der Schweißanlage überhaupt die Möglichkeit hat, die URI- oder MIME-Dateninhalte grafisch oder akustisch anzuzeigen oder eine Verbindung zu einer webbasierten Ressource aufzubauen. Zur Übertragung von Daten und/oder Programmen von der Komponente der Schweißanlage zum mobilen Endgerät weist die Komponente der Schweißanlage eine Einbettungseinheit auf, mit deren Hilfe Daten und/oder Programme in eine URI oder ein MIME-Format eingebettet werden können.

Die übertragbaren Daten umfassen bevorzugt Texte, Einstellwerte, insbesondere schweißaufgabenspezifische Einstellwerte, Konfigurationsdaten, Parameter, Spracheinstellungen, Flash-Files und/oder Informationen zu Service- und Helpdesk-Zwecken.

Vorzugsweise sind die Daten und/oder Programme zur Steuerung von Aktoren nutzbar, die Einfluss nehmen auf einen elektrischen, physikalischen oder chemischen Prozess.

Von Vorteil ist es, wenn mittels der Daten und/oder Programme Messwert-Erfassungssysteme beeinflussbar sind, wobei mittels der Messwert-Erfassungssysteme elektrischen, physikalische oder chemische Größen erfassbar oder verarbeitbar sind.

Bevorzugt sind mittels der NFC-Schnittstelle der Komponente der Schweißanlage in eine URI oder ein MIME-Format eingebettete Daten und/oder Programme in einem NDEF-Datenformat übertragbar. Die Übertragung in einem NDEF-Datenformat hat den Vorteil, dass der Verbindungsaufbau und die Datenübertragung zwischen dem mobilen Endgerät und der Komponente der Schweißanlage entsprechend der NFC-Forum Connection Handover Technical Specification erfolgen kann, das heißt mittels einer in der Informationstechnologie weit verbreiteten Spezifikation.

Bei einer vorteilhaften Ausgestaltung der erfindungsgemäßen Komponente der elektrischen Schweißanlage sind in eine URI oder ein MIME-Format eingebettete Daten und/oder Programme zwischen der Komponente der elektrischen Schweißanlage und dem mobilen Endgerät bidirektional übertragbar. Es können somit sowohl vom mobilen Endgerät zur Komponente der Schweißanlage als auch von der Komponente der elektrischen Schweißanlage zum mobilen Endgerät Daten und/oder Programme übertragen werden, die in eine URI oder ein MIME-Format eingebettet sind, wobei die Übertragung in einem Standardformat der NFC-Datenübertragung erfolgt.

Die in eine URI oder ein MIME-Format eingebetteten Daten und/oder Programme sind vorteilhafterweise im Peer-to-Peer-Modus oder im Card-Emulation-Modus übertragbar.

Von besonderem Vorteil ist es, wenn die Komponente der elektrischen Schweißanlage eine Bluetooth- oder WLAN-Schnittstelle aufweist und von der Komponente der Schweißanlage nach Empfang von in eine URI oder ein MIME-Format eingebetteten Daten und/oder Programmen selbsttätig eine Bluetooth- oder WLAN-Verbindung zum mobilen Endgerät herstellbar ist. Eine derartige Ausgestaltung hat den Vorteil, dass zunächst Daten und/oder Programme vom mobilen Endgerät über den NFC-Kommunikationskanal an die Komponente der elektrischen Schweißanlage übertragen werden können, und dass anschließend von der Komponente der elektrischen Schweißanlage selbsttätig eine Bluetooth- oder WLAN-Verbindung zum mobilen Endgerät hergestellt werden kann.

Die Komponente der elektrischen Schweißanlage ist vorteilhafterweise ein Steuerteil, ein Stromversorgungsteil, ein Leistungsteil, ein Bedienteil, ein Schweißbrenner, ein Drahtvorschubteil, ein Wasserkühlteil oder auch ein Netzwerkteil der Schweißanlage.

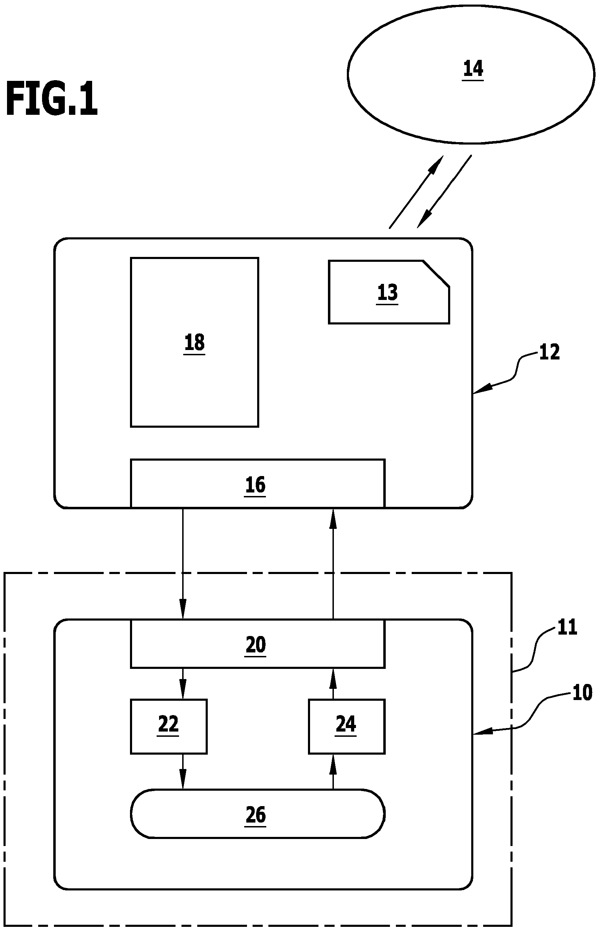

Die nachfolgende Beschreibung einer vorteilhaften Ausführungsform der Erfindung dient im Zusammenhang mit der Zeichnung der näheren Erläuterung.

In der einzigen Figur der Zeichnung sind schematisch eine insgesamt mit dem Bezugszeichen 10 belegte Komponente einer elektrischen Schweißanlage 11 sowie ein mobiles Endgerät 12 und eine webbasierte Ressource 14 dargestellt. Bei der Komponente 10 der Schweißanlage 11 kann es sich beispielsweise um ein Steuerteil, ein Stromversorgungsteil, ein Leistungsteil, ein Bedienteil, ein Schweißbrenner, ein Drahtvorschubteil, ein Wasserkühlteil oder auch um ein Netzwerkteil einer elektrischen Schweißanlage handeln.

Das mobile Endgerät 12 kann beispielsweise in Form eines Smartphones ausgestaltet sein oder beispielsweise auch in Form eines Tablet-Computers oder eines Personal Digital Assistants (PDAs). Es kann auch vorgesehen sein, dass das mobile Endgerät 12 in Form eines Notebooks ausgestaltet ist.

Die webbasierte Ressource 14 kann beispielsweise in Form eines Webservers ausgestaltet sein, der vom Hersteller der Schweißanlagenkomponente 10 oder einem vom Hersteller der Schweißanlagenkomponente 10 autorisierten Unternehmen bereitgestellt wird und zu dem über das Internet vom mobilen Endgerät 12 eine Verbindung hergestellt werden kann. Das mobile Endgerät umfasst hierzu einen Webbrowser 13, mit dem ein Weblink, insbesondere eine URI-Adresse aufgerufen werden kann.

Das mobile Endgerät 12 weist eine NFC-Schnittstelle 16 auf sowie eine Anzeigevorrichtung 18, beispielsweise einen Touchscreen. Das mobile Endgerät 12 ist mit einem üblichen Betriebssystem ausgestattet und auch mit einem E-Mail-Programm. Darüber hinaus weist das mobile Endgerät 12 übliche Anzeige- und Abspielfunktionen auf sowie eine Standardsoftware zur NFC-Kommunikation. Die NFC-Kommunikation erfolgt über die NFC-Schnittstelle 16.

Die Komponente 10 der Schweißanlage 11 weist eine NFC-Schnittstelle 20 auf, die ausgestaltet ist, um mit der NFC-Schnittstelle 16 des mobilen Endgeräts 12 zur Ausbildung eines NFC-Kommunikationskanals zusammenzuwirken, wobei die Kommunikation in einem Standardformat der NFC-Datenübertragung erfolgt. Die Komponente 10 weist darüber hinaus eine Extraktionseinheit 22 und eine Einbettungseinheit 24 auf. Mittels der Extraktionseinheit 22 können Daten und/oder Programme, die von der Komponente 10 über die NFC-Schnittstelle 20 empfangen werden und die in eine URI oder ein MIME-Format eingebettet sind, extrahiert werden, und mittels der Einbettungseinheit 24 können von der Komponente 10 Daten und/oder Programme in eine URI oder ein MIME-Format eingebettet werden, um die eingebetteten Daten anschließend über die NFC-Schnittstelle 20 drahtlos an die NFC-Schnittstelle 16 des mobilen Endgeräts 12 zu übertragen.

Die Komponente 10 weist darüber hinaus eine Verarbeitungseinheit 26 auf, die die übertragenen Daten und/oder Programme nutzt. Die Verarbeitungseinheit 26 kann beispielsweise ein Speicherglied aufweisen und einen Mikroprozessor, der zur Steuerung eines Aktors der Schweißanlage zum Einsatz kommt und/ oder der mit einem Messwert-Erfassungssystem der Schweißanlage signalleitend verbunden ist.

Ein Benutzer der Schweißanlage 11 kann vom mobilen Endgerät 12 Daten und/oder Programme an die Schweißanlagenkomponente 10 übertragen. Eine derartige Übertragung kann beispielsweise erfolgen, um eine Funktionserweiterung der Schweißanlage 11 vorzunehmen. Im dargestellte Ausführungsbeispiel kann der Benutzer in einem ersten Schritt mittels des Webbrowsers 13 des mobilen Endgeräts 12 eine Internetverbindung zur webbasierten Ressource 14 herstellen und entsprechende Daten und/oder Programme anfordern. Die Daten und/oder Programme werden von der webbasierten Ressource 14 bereitgestellt, wobei die webbasierte Ressource 14 die Daten und/oder Programme in eine URI oder ein MIME-Format einbettet. Die derart eingebetteten Daten und/oder Programme werden von der webbasierten Ressource 14 entweder über das Internet oder per E-Mail an das mobile Endgerät 12 übertragen. Im dargestellten Ausführungsbeispiel sind die Daten und/oder Programme in einen Weblink eingebettet, der anschließend vom Webbrowser 13 des mobilen Endgeräts 12 aufgerufen werden kann. Es wird dann über das Internet eine Verbindung zu einer bestimmten Webseite der webbasierten Ressource 14 hergestellt, von der der Benutzer Informationen, insbesondere Handlungsanweisungen, herunterladen kann, die die angeforderten Daten und/oder Programme betreffen. Diese Informationen können dem Benutzer an der Anzeigevorrichtung 18 grafisch angezeigt werden. Die Informationen beinhalten die Aufforderung an den Benutzer, das mobile Endgerät 12 mit möglichst geringem Abstand an der NFC-Schnittstelle 20 der Komponente 10 der Schweißanlage 11 zu positionieren. Zwischen der NFC-Schnittstelle 16 des mobilen Endgeräts 12 und der NFC-Schnittstelle 20 der Komponente 10 wird daraufhin selbsttätig ein NFC-Kommunikationskanal aufgebaut und die in eine URI oder ein MIME-Format eingebetteten Daten und/oder Programme werden vom mobilen Endgerät 12 selbsttätig in einem Standardformat der NFC-Datenübertragung an die Komponente 10 übertragen. Die Datenübertragung erfolgt mit Hilfe von Software, über die das mobile Endgerät 12 standardmäßig verfügt, ohne dass hierzu eine spezielle Anwendungssoftware zum Einsatz kommen muss, die der Benutzer des mobilen Endgeräts 12 zusätzlich zur Ausbildung des NFC-Kommunikationskanals mit der Komponente 10 aufspielen müsste. Die spezielle Anwendungssoftware kann entfallen, da die Daten und/oder Programme in eine URI oder in ein MIME-Format eingebettet sind und in einem Standardformat der NFC-Datenübertragung übertragen werden, wobei dieses Standardformat auch zum Aufbau eines NFC-Kommunikationskanals mit einem sonstigen mobilen Endgerät zum Einsatz kommt. Der Verbindungsaufbau und die Datenübertragung erfolgt vorteilhafterweise entsprechend der Connection Handover Technical Specification des NFC-Forums, wobei als Standardformat ein NDEF-Datenformat zum Einsatz kommt.

Die eingebetteten Daten und/oder Programme werden von der Komponente 10 mittels der Extraktionseinheit 22 extrahiert und anschließend an die Verarbeitungseinheit 26 weitergeleitet. Die Verarbeitungseinheit 26 verarbeitet die Daten und/oder Programme zur Erzielung der vom Benutzer gewünschten Funktionserweiterung.

Der NFC-Kommunikationskanal zwischen dem mobilen Endgerät 12 und der Komponente 10 ist bidirektional ausgestaltet, es können also Daten und/oder Programme auch von der Komponente 10 an das mobile Endgerät 12 übertragen werden. Hierzu weist die Komponente 10 die Einbettungseinheit 24 auf, mit deren Hilfe Daten und/oder Programme, die von der Verarbeitungseinheit 26 zur Verfügung gestellt werden, in eine URI oder ein MIME-Format eingebettet werden. Die derart eingebetteten Daten und/oder Programme werden von der NFC-Schnittstelle 20 der Komponente 10 in einem Standardformat der NFC-Datenübertragung an die NFC-Schnittstelle 16 des mobilen Endgeräts 12 übertragen, sofern das mobile Endgerät 12 in sehr geringem Abstand an der NFC-Schnittstelle 20 der Schweißanlagenkomponente 10 positioniert wird.

Von der Einbettungseinheit 24 werden die Daten und/oder Programme, die an das mobile Endgerät 12 übertragen werden sollen, günstigerweise in einen Weblink eingebettet, der anschließend, nachdem die Daten und/oder Programme vom mobilen Endgerät 12 empfangen wurden, vom Webbrowser 13 des mobilen Endgeräts 12 aufgerufen werden kann um eine Internetverbindung zur webbasierten Ressource 14 herzustellen. Die webbasierte Ressource 14 kann die von der Komponente 10 über das mobile Endgerät 12 übertragen Daten und/oder Programme auswerten. Die Daten und/oder Programme können beispielsweise eine Aufforderung an die webbasierte Ressource 14 enthalten, einen Freischalt- oder Autorisierungscode zu übermitteln, der zur Verarbeitung der zuvor vom mobilen Endgerät an die Komponente 10 übertragenen Daten und/oder Programme erforderlich ist. Die webbasierte Ressource 14 kann anschließend eine Autorisierungsprüfung durchführen. Gibt die webbasierte Ressource 14 die Autorisierung frei, so überträgt sie an das mobile Endgerät 12 einen entsprechenden Freischalt- oder Autorisierungscode, der in eine URI oder ein MIME-Format eingebettet ist und vom mobilen Endgerät 12 in der voranstehend bereits beschriebenen Art und Weise an die Komponente 10 übertragen werden kann. Nach Empfang des Freischalt- oder Autorisierungscodes durch die Komponente 10 kann dann von der Verarbeitungseinheit 26 die gewünschte Funktionserweiterung durchgeführt werden.

Eine Funktionserweiterung der Schweißanlagenkomponente 10 kann somit vom Benutzer jederzeit vorgenommen werden, sofern er mittels des mobilen Endgeräts 12 eine Verbindung zur webbasierten Ressource 14 herstellen kann. Eine Funktionserweiterung ist hierbei möglich, ohne dass die Mobilität der elektrischen Schweißanlage dadurch beeinträchtigt wird oder die elektrische Schweißanlage permanent vernetzt sein müsste.

## Patentansprüche

1. Verfahren zur Nahfeldkommunikation mit einer Komponente (10) einer elektrischen Schweißanlage (11), wobei man Daten und/oder Programme über einen NFC-Kommunikationskanal überträgt, **dadurch gekennzeichnet, dass** man die Daten und/oder Programme in eine URI oder ein MIME-Format einbettet und in einem Standardformat der NFC-Datenübertragung über den NFC-Kommunikationskanal zwischen einem mobilen Endgerät (12) und der Komponente (10) der Schweißanlage (11) überträgt, wobei die vom mobilen Endgerät (12) übertragenen Daten und/oder Programme von der Komponente (10) der Schweißanlage (11) extrahiert und direkt verarbeitet werden ohne Aufbau einer Verbindung zu einer webbasierten Ressource (14) und ohne zwingende Darstellung der URI- oder MIME-Dateninhalte.

2. Verfahren nach Anspruch 1, **dadurch gekennzeichnet, dass** die Daten Texte, Einstellwerte, insbesondere schweißaufgabenspezifische Einstellwerte, Konfigurationsdaten, Parameter, Spracheinstellungen, Flash-Files und/oder Informationen zu Service- und Helpdesk-Zwecken umfassen.

3. Verfahren nach Anspruch 1 oder 2, **dadurch gekennzeichnet, dass** die Daten und/oder Programme zur Steuerung von Aktoren genutzt werden, die Einfluss nehmen auf einen elektrischen, physikalischen oder chemischen Prozess.

4. Verfahren nach einem der voranstehenden Ansprüche, **dadurch gekennzeichnet, dass** mittels der Daten und/oder Programme Messwert-Erfassungssystem beeinflusst werden, wobei mittels der Messwerterfassungssysteme elektrische, physikalische oder chemische Größen erfasst und/ oder verarbeitet werden.

5. Verfahren nach einem der voranstehenden Ansprüche, **dadurch gekennzeichnet, dass** das Standardformat der NFC-Datenübertragung ein NDEF-Datenformat ist.

6. Verfahren nach einem der voranstehenden Ansprüche, **dadurch gekennzeichnet, dass** zur Übertragung der Daten und/oder Programme vom mobilen Endgerät (12) ausschließlich standardmäßig installierte Funktionen genutzt werden.

7. Verfahren nach einem der voranstehenden Ansprüche, **dadurch gekennzeichnet, dass** man die Daten und/oder Programme in einen Weblink einbettet und den Weblink in einem Webbrowser oder einem E-Mail-Programm des mobilen Endgeräts (12) aufruft.

8. Verfahren nach Anspruch 7, **dadurch gekennzeichnet, dass** man eine Internetverbindung herstellt vom mobilen Endgerät zu einer webbasierten Ressource (14) und von der webbasierten Ressource (14) Informationen, insbesondere Handlungsanweisungen, die die Daten und/oder Programme betreffen, herunterlädt und am mobilen Endgerät (12) grafisch und/oder akustisch anzeigt.

9. Verfahren nach Anspruch 8, **dadurch gekennzeichnet, dass** die Daten und/oder Programme von der webbasierten Ressource (14) gespeichert und/oder verarbeitet werden.

10. Verfahren nach einem der Ansprüche 1 bis 6, **dadurch gekennzeichnet, dass** man die Daten und/oder Programme in eine Foto-, Audio- oder Videodatei einbettet und diese am mobilen Endgerät (12) grafisch oder akustisch anzeigt.

11. Verfahren nach einem der voranstehenden Ansprüche, **dadurch gekennzeichnet, dass** man die Daten und/oder Programme mittels einer webbasierten Ressource (14) in eine URI oder ein MIME-Format einbettet.

12. Verfahren nach Anspruch 11, **dadurch gekennzeichnet, dass** die webbasierte Ressource (14) ein Webserver ist.

13. Verfahren nach Anspruch 11 oder 12, **dadurch gekennzeichnet, dass** man die eingebetteten Daten und/oder Programme von der webbasierten Ressource (14) über eine E-Mail- oder Internetverbindung an das mobile Endgerät (12) überträgt.

14. Verfahren nach einem der voranstehenden Ansprüche, **dadurch gekennzeichnet, dass** man die vom mobilen Endgerät (12) übertragenen, in eine URI oder ein MIME-Format eingebetteten Daten und/oder Programme mittels einer Extraktionseinheit (22) der Komponente (10) der Schweißanlage (11) extrahiert.

15. Verfahren nach einem der voranstehenden Ansprüche, **dadurch gekennzeichnet, dass** man die an das mobile Endgerät (12) zu übertragenden Daten und/oder Programme mittels einer Einbettungseinheit (24) der Komponente (10) der Schweißanlage (11) in eine URI oder ein MIME-Format einbettet.

16. Verfahren nach einem der voranstehenden Ansprüche, **dadurch gekennzeichnet, dass** die Übertragung von Daten und/oder Programmen zwischen dem mobilen Endgerät (12) und der Komponente (10) der Schweißanlage (11) bidirektional erfolgt.

17. Verfahren nach einem der voranstehenden Ansprüche, **dadurch gekennzeichnet, dass** man den Verbindungsaufbau und die Datenübertragung gemäß der NFC-Forum Connection Handover Technical Specification durchführt.

18. Verfahren nach einem der voranstehenden Ansprüche, **dadurch gekennzeichnet, dass** nach Empfang der Daten und/oder Programme selbsttätig eine Bluetooth- oder WLAN-Verbindung zwischen der Komponente (10) der Schweißanlage und dem mobilen Endgerät (12) hergestellt wird.

19. Verfahren nach einem der voranstehenden Ansprüche, **dadurch gekennzeichnet, dass** die Komponente (10) der Schweißanlage (11) ein Steuerteil, ein Stromversorgungsteil, ein Leistungsteil, ein Bedienteil, ein Schweißbrenner, ein Drahtvorschubteil, ein Wasserkühlteil oder ein Netzwerkteil der Schweißanlage (11) ist.

20. Komponente einer elektrischen Schweißanlage zur Durchführung des Verfahrens nach einem der voranstehenden Ansprüche, **dadurch gekennzeichnet, dass** die Komponente (10) eine NFC-Schnittstelle (20) zur drahtlosen Nahfeldkommunikation mit einem mobilen Endgerät (12) aufweist und dass die Komponente (10) eine Extraktionseinheit (22) und/ oder eine Einbettungseinheit (24) aufweist, wobei mittels der Extraktionseinheit (22) in eine URI oder ein MIME-Format eingebettete Daten und/ oder Programme extrahierbar und mittels der Einbettungseinheit (24) Daten und/oder Programmen in eine URI oder ein MIME-Format einbettbar sind, und wobei die Komponente (10) der Schweißanlage (11) eine Verarbeitungseinheit (26) aufweist zur direkten Verarbeitung der extrahierten Daten und/oder Programme ohne Aufbau einer Verbindung zu einer webbasierten Ressource (14) und ohne zwingende Darstellung der URI- oder MIME-Dateninhalte.

21. Komponente einer elektrischen Schweißanlage nach Anspruch 20, **dadurch gekennzeichnet, dass** mittels der NFC-Schnittstelle (20) in eine URI oder ein MIME-Format eingebettete Daten und/oder Programme in einem NDEF-Datenformat übertragbar sind.

22. Komponente einer elektrischen Schweißanlage nach Anspruch 20 oder 21, **dadurch gekennzeichnet, dass** sowohl vom mobilen Endgerät (12) zur Komponente (10) der Schweißanlage (11) als auch von der Komponente (10) der Schweißanlage zum mobilen Endgerät (12) Daten und/oder Programme übertragbar sind, die in eine URI oder ein MIME-Format eingebettet sind.

23. Komponente einer elektrischen Schweißanlage nach einem der Ansprüche 20 bis 22, **dadurch gekennzeichnet, dass** die Komponente (10) eine Bluetooth- oder WLAN-Schnittstelle aufweist und dass von der Komponente (10) nach Empfang und Extraktion der in eine URI oder ein MIME-Format eingebetteten Daten und/oder Programmen selbsttätig eine Bluetooth- oder WLAN-Verbindung zum mobilen Endgerät (12) herstellbar ist.

24. Komponente einer elektrischen Schweißanlage nach einem der Ansprüche 20 bis 23, **dadurch gekennzeichnet, dass** die Komponente (10) ein Steuerteil, ein Stromversorgungsteil, ein Leistungsteil, ein Bedienteil, ein Schweißbrenner, ein Drahtvorschubteil, ein Wasserkühlteil oder ein Netzwerkteil der Schweißanlage ist.
